# EUROPÄISCHE PATENTSCHRIFT

(11) **EP 0 911 284 B1**
(45) Veröffentlichungstag und Bekanntmachung des Hinweises auf die Patenterteilung: **09.04.2003**
(21) Anmeldenummer: 98119614.0
(22) Anmeldetag: 16.10.1998
(51) Int. Cl.: B65G 53/12, B65G 53/22, B65G 53/36

(54) **Verfahren zum Ausfördern von Schüttfähigen Baustoffen aus einem Silobehälter mit unter 1 bar atmosphärischen Überdruck**
Method of feeding construction bulk material from a silo with a pressure lower than 1 bar atmospheric overpressure
Méthode de déchargement des matériaux de construction en vrac d'un silo avec une surpression atmospherique en-dessous d'un bar.

(30) Priorität: 20.10.1997 DE 29718576 U
(43) Veröffentlichungstag der Anmeldung: 28.04.1999
(73) Patentinhaber: Hasit Trockenmörtel GmbH & Co. KG, 85356 Freising (DE)
(72) Erfinder: Gerbl, Erich, 85459 Berglern (DE)
(74) Vertreter: Grünecker, Kinkeldey, Stockmair & Schwanhäusser Anwaltssozietät

(56) Entgegenhaltungen:
- EP-A- 0 090 923
- EP-A- 0 297 463
- DE-A- 1 817 507
- DE-A- 19 604 578

## Beschreibung

Die Erfindung bezieht sich auf ein Verfahren zum Lagern und Ausfördern von schüttfähigen Baustoffen, insbesondere Trockenmörtel, aus einem Silobehälter.

Aus der Praxis sind Drucksilos bekannt, die in einer Befüllstation mit schüttfähigen Baustoffen, z.B. Trockenmörtel, befüllt werden. Die Silos werden anschließend per LKW an eine Baustelle gefahren und aufgestellt. Vor Ort dient ein Kompressor dazu, die Baustoffe über einen Förderschlauch abzufördern. Um eine kontinuierliche Entleerung des Silos und eine gute Förderung zu erreichen, wird der Luftdruck innerhalb der Silos auf mehrere bar erhöht. Der Druck soll den Austrag der Baustoffe erleichtern und die ständige Förderung sicherstellen.

In der DE-A-1 817 507 ist eine Einrichtung zum Dosieren und Transportieren pulverisierter Materialien, wie z.B. Zement, beschrieben, bei welcher ein Kompressor eine Druckluftleitung beaufschlagt, welche in den unteren Bereich eines Silobehälters mündet und über eine Zweigleitung in den Bodenbereich des Silobehälters mündet, von wo sich eine Ausgangsleitung zum Abfördern der Baustoffe unter Druck erstreckt. Die weiterführende Förderleitung ist über eine Nebenleitung mit dem Druckbehälter verbunden.

Bei stark gefülltem Behälter wird der Behälter bis zu einem Druck von 3 bar beaufschlagt und danach entleert. Ist der Behälter nur wenig gefüllt, so kann auch ein geringerer Druck von maximal 0,5 bar während des Entleerens bestehen. Beim Entleeren des Behälters steigt der Druck im Behälter an. Bei einem optimalen Druck von 1,55 bar öffnet sich ein Auslassventil, so dass das Material durch die Ausgangsleitung nach außen geführt.

Die DE-A-196 04 578 beschreibt eine Fördervorrichtung für Trockenmörtel, bei welcher in einem Silobehälter Trockenmörtel gelagert ist und der Silobehälter über eine Zuleitung von einem Kompressor mit Druck beaufschlagt wird. Unterhalb des Silobehälters ist ein Fördergefäß angeordnet, an dessen unteren Ende eine Zuleitung des Kompressors mündet und eine Förderleitung zu einem Verbraucher abzweigt. Die Zuleitungen zweigen von dem Kompressor ab, wobei in der Zuleitung zu dem Fördergefäß ein Belüftungsventil und in der anderen Zuleitung ein Umgehungsventil angeordnet ist. Der Kompressor ist mit einem Druckmessgerät versehen, das eine Steuereinrichtung aufweist, die das Belüftungsventil und das Umgehungsventil derart steuert, dass bei einem Druckoberwert das Belüftungsventil schließt und das Umgehungsventil öffnet und bei einem Druckunterwert das Belüftungsventil öffnet und das Umgehungsventil schließt. Somit pendeln die Druckverhältnisse stets zwischen einem Druckoberwert und einem Druckunterwert hin und her, wobei als Druckunterwert 1,7 bar und als Druckoberwert 2 bis 3 bar vorgeschlagen werden.

Bei diesen Vorrichtungen ist die Ausgestaltung des Silos als Druckbehälter problematisch. Dieser ist nicht nur teurer herzustellen und zu unterhalten als ein einfacher Behälter, sondern er muss auch ständig auf seine Drucksicherheit überprüft und überwacht werden, da er sonst nicht ohne Sicherheitsrisiko verwendet werden kann.

In der EP-A-0 297 463 wird eine Vorrichtung zum Aufbereiten und Zuführen von pulverförmigem Material in bestimmter Dosierung zu einer Heißsprühpistole beschrieben. Sie ist für durch Hitze erweichte Materialien gedacht, wie Metall oder Keramik, welche auf eine Materialoberfläche aufgebracht werden soll und dort warmverschweißt eine Schicht bilden soll. Ein Beispiel einer Anwendung ist eine Plasmaspritzpistole. Die dabei verwendeten Materialien haben andere Konsistenz und Eigenschaften als schüttfähige Baustoffe, wie z.B. Trockenmörtel. Der Aufbau der Vorrichtung ist derart gestaltet, dass er nicht als Baustoffsilo zum Abfördem von Baustoffen verwendbar und somit gattungsfremd ist.

Der Erfindung liegt die Aufgabe zugrunde, trotz gleichbleibender kontinuierlicher Förderung von Baustoffen die Herstellung und den Unterhalt eines Silobehälters zu vereinfachen und zu verbilligen.

Dies wird erfindungsgemäß gelöst mit einem Verfahren zum Ausführen von schüttfähigen Baustoffen, insbesondere Trockenmörtel, aus einem Silobehälter, wobei der Baustoff in dem Behälter gelagert und über einen Förderschlauch ausgeführt wird, und der Behälter von einem Kompressor über eine Druckleitung unter Druck gesetzt wird, wobei der Druck des Behälters einer Druckregeleinrichtung gemeldet wird, welche den Druck in dem Behälter und der Druckleitung auf unter 1 bar atmosphärischen Überdruck begrenzt, und ein mit einer Abgabeöffnung des Behälters leitungsverbundener Förderschlauch für den Baustoff über eine separate Druckleitung von dem Kompressor mit Druckluft beaufschlagt wird, deren Druck von dem Silobehälter druckverschieden ist und unabhängig davon gesteuert wird.

Bei dem erfindungsgemäßen Verfahren sorgt die Druckregeleinrichtung dafür, dass der Maximaldruck in der den Silobehälter versorgenden Druckleitung nicht über 1 bar atmosphärischen Überdruck steigt. Mit diesem Grenzdruck erreicht man überraschende Vorteile. Er reicht aus um den kontinuierlichen Austrag der Baustoffe aus dem Silo sicherzustellen.

Der Kompressor kann den eigenen Förderschlauch unabhängig vom Silo mit einem höheren Druck beaufschlagen, so dass die Förderung unabhängig von dem Druckaufbau innerhalb des Silos erfolgt.

Trotz des relativ geringen Druckes im Silo wird mit der Erfindung eine störungsfreie und permanente Förderung der schüttfähigen Baustoffe erzielt. Die getrennte Druckversorgung des Förderschlauches einerseits und des Silos andererseits bietet eine preiswerte Variante zu den bisher bekannten Drucksilos.

Der Silobehälter selbst ist maximal 1 bar atmosphärischen Überdruck ausgesetzt. Er kann infolgedessen relativ preiswert gebaut werden; eine ständige Überwachung und Überprüfung als Druckbehälter entfällt.

Vorteilhafte Ausführungsformen und Weiterbildungen der Erfindung sind in den abhängigen Ansprüchen genannt.

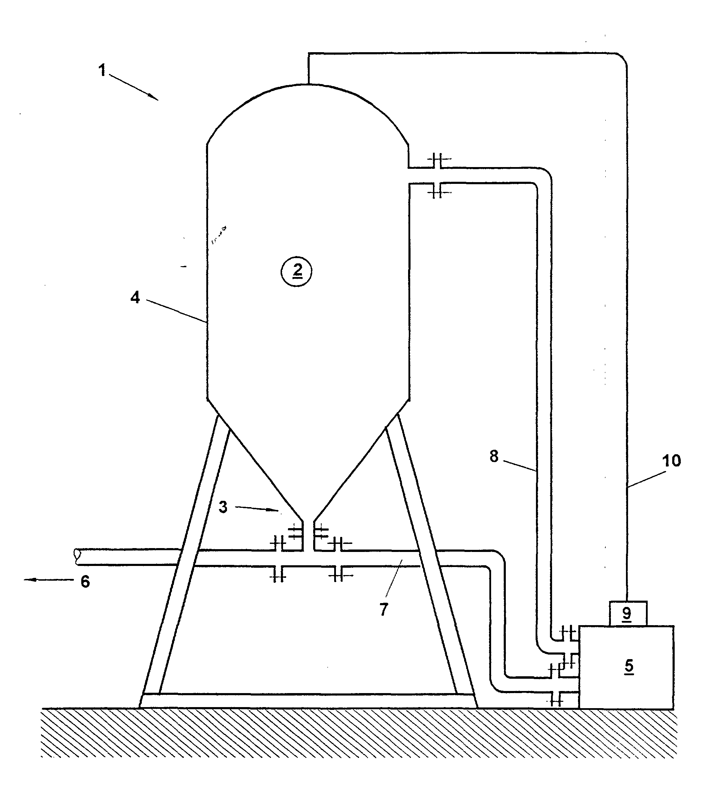

Eine Ausführungsform der Erfindung ist nachfolgend anhand der einzigen Figur beschrieben.

Die Vorrichtung 1 verfügt über einen Behälter 4, der im Bereich eines zylindrischen Wandabschnittes mit einer Füllöffnung 2 versehen ist. Der Behälter ist oben mit einer Kugelkalotte verschlossen, unten verfügt er über einen V-förmig nach unten zulaufenden Trichter, an dessen unteren Ende eine Abgabeöffnung 3 angeordnet ist. Sie ist üblicherweise mit einem Füllventil versehen, mit Hilfe dessen der Durchtritt des zu fördernden Baustoffes gesteuert werden kann.

Ein Kompressor 5 ist mit einer Druckleitung 7 mit der Abgabeöffnung 3 leitungsverbunden. Die Druckleitung führt über diese Abgabeöffnung und das bereits angesprochene Füllventil zu einem Verbraucher 6.

Der Kompressor ist über eine weitere Leitung 8 mit dem Behälter 4 verbunden. Eine Druckregeleinrichtung 9 begrenzt den Druck innerhalb dieser Leitung 8 aber auch damit innerhalb des Behälters 4 auf einen Maximaldruck von unter 1 bar atmosphärischen Überdrucks.

Die Druckregeleinrichtung kann zu diesem Zweck über eine Sensorleitung 10 mit der Druckleitung 8 bzw. dem Behälter 4 verbunden sein. Die Druckregeleinrichtung 9 kann auch die Druckleitung 7 z.B. über einen eigenen Sensor überwachen. Der Kompressor kann die Förderleitung 7 und die Druckleitung 8 mit unterschiedlichen Drücken beaufschlagen, um die Förderung der Baustoffe unabhängig von im Behälter 4 vorhandenen Druck zu steuern.

## Patentansprüche

1. Verfahren zum Ausfördem von schüttfähigen Baustoffen, insbesondere Trockenmörtel, aus einem Silobehälter (4), wobei der Baustoff in dem Behälter (4) gelagert und über einen Förderschlauch ausgeführt wird, und der Behälter (4) von einem Kompressor (5) über eine Druckleitung (8) unter Druck gesetzt wird, wobei der Druck des Behälters (4) einer Druckregeleinrichtung (9) gemeldet wird, welche den Druck in dem Behälter (4) und der Druckleitung (8) auf unter 1 bar atmosphärischen Überdruck begrenzt und ein mit einer Abgabeöffnung (3) des Behälters (4) leitungsverbundener Förderschlauch, für den Baustoff über eine separate Druckleitung (7) von dem Kompressor (5) zum Förderschlauch mit Druckluft beaufschlagt wird, deren Druck von dem Silobehälterdruck (4) verschieden ist und unabhängig davon gesteuert wird.

2. Verfahren nach Anspruch 1
**dadurch gekennzeichnet,**
**dass** der Förderschlauch mit einem höheren Druck als der Silobehälter (4) beaufschlagt wird.

3. Verfahren nach Anspruch 1 oder 2,
**dadurch gekennzeichnet,**
**dass** die Druckleitung (7) zwischen Förderschlauch und Kompressor (5) von einem separaten Sensor überwacht wird.

## Claims

1. Method of conveying pourable building materials, in particular dry mortar, out of a silo container (4), wherein the building material is stored in the container (4) and fed out via a conveying hose, and the said container (4) is pressurised by a compressor (5) via a pressure line (8), and wherein the pressure of the container (4) is reported to a pressure-regulating apparatus (9) which limits the pressure in the container (4) and the pressure line (8) to less than 1 bar atmospheric overpressure, and a conveying hose for the building material, which hose is connected by line to a discharge aperture (3) of the container (4), is acted upon, via a separate pressure line (7) from the compressor (5) to the conveying hose, with compressed air, the pressure of which is different from the pressure of the silo container (4) and is controlled independently thereof.

2. Method according to claim 1,
**characterised in that**
the conveying hose is acted upon with a higher pressure than the silo container (4).

3. Method according to claim 1 or 2,
**characterised in that**
the pressure line (7) between the conveying hose and the compressor (5) is monitored by a separate sensor.

## Revendications

1. Procédé de déchargement de matériaux de construction en vrac, en particulier de mortier sec, d'un silo (4), le matériau de construction étant stocké dans le silo (4) et étant évacué par un tuyau de transport, et le silo (4) étant mis sous pression par un compresseur (5) par l'intermédiaire d'une conduite de pression (8), la pression du silo (4) étant transmise à un dispositif de régulation de pression (9) qui limite la pression dans le silo (4) et dans la conduite de pression (8) à une surpression atmosphérique inférieure à 1 bar, et un tuyau de transport du matériau de construction relié par une conduite à un orifice de distribution (3) du silo (4) étant alimenté en air comprimé par une conduite de pression (7) séparée allant du compresseur (5) au tuyau de transport, la pression de l'air comprimé étant différente de celle du silo (4) et étant commandée indépendamment de celle-ci.

2. Procédé selon la revendication 1, **caractérisé en ce que** le tuyau de transport est soumis à une pression plus élevée que le silo (4).

3. Procédé selon la revendication 1 ou 2, **caractérisé en ce que** la conduite de pression (7) entre le tuyau de transport et le compresseur (5) est surveillée par un capteur séparé.
